# EUROPÄISCHE PATENTSCHRIFT

(11) **EP 1 715 009 B1**
(45) Veröffentlichungstag und Bekanntmachung des Hinweises auf die Patenterteilung: **03.12.2008**
(21) Anmeldenummer: 06112888.0
(22) Anmeldetag: 21.04.2006
(51) Int. Cl.: C09C 1/42

(54) **Verwendung von kalziniertem Kaolin für Oberflächenbeschichtungen, deren Herstellungsverfahren und kalziniertes Kaolin**
Use of calcined kaolin for surface coatings, method for its production and calcined kaolin
Utilisation de kaolin calciné pour le revêtement de surface, méthode de sa production et kaolin calciné

(30) Priorität: 21.04.2005 DE 102005018650
(43) Veröffentlichungstag der Anmeldung: 25.10.2006
(73) Patentinhaber: bene_fit GmbH, 92242 Hirschau (DE)
(72) Erfinder: Kräuter, Reinhard, 92237, Sulzbach-Rosenberg (DE)
(74) Vertreter: Hannke, Christian

(56) Entgegenhaltungen:
- WO-A-20/05019349
- GB-A- 1 373 361
- US-A- 6 027 561

## Beschreibung

Die Erfindung betrifft eine Verwendung von kalziniertem Kaolin und kalziniertes Kaolin als Füllstoff für die Erhöhung des Weißgrades und der Opazität von weißen oder farbigen Mischungen gemäß den Oberbegriffen der Patentansprüche 1 und 6 und ein Verfahren zur Herstellung des Oberflächenschichtmaterials, welches mindestens ein Bindemittel und ein kalziniertes Kaolin als Füllstoff umfasst, gemäß dem Oberbegriff des Patentanspruches 9.

Aus US 3 383 438 ist kalziniertes Kaolin bekannt, welches zur Erhöhung des Weißgrades von Produkten aus der Papier- und Plastikindustrie verwendet wird. Hierbei weisen die verwendeten Kaoline als Ausgangsmaterial vor deren Kalzinierung einen Komgrößendurchmesser von weniger als 2 µm bezogen auf 92 Ma-% des Gesamtgewichtes auf. Es wird bei dem darin beschriebenen Herstellungsverfahren, welches darauf gerichtet ist, durch Kalzinierung von Kaolin einen höheren Weißgrad des Kaolins zu erhalten, die Auffassung vertreten, dass der Weißgrad zudem mit abnehmender Größe der kalzinierten Kaolinkömer bzw. - partikel zunimmt.

Als ein weiterer Parameter für die Erhöhung des Weißgrades des kalzinierten Kaolins wird eine hohe Erwärmungstemperatur während des Kalzinierens angesehen. Dies führt allerdings zu einer unerwünschten Erhöhung der Abrasivität und höheren Energiekosten bei der Kalzinierung.

In US 3,383,438 wird für das darin beschriebene Verfahren zum Kalzinieren von Kaolin das Kaolin getrocknet und in einer Hammermühle pulverisiert, bevor es für den eigentlichen Kalzinierungsvorgang erwärmt wird.

In US 3,586,523 werden kalzinierte Kaolinpigmente beschrieben, die als Füllmaterial für Papier mit geringem Gewicht verwendet werden. Hierfür wird ein spezieller Typ an sedimentärem Kaolinton, nämlich harter Ton kalziniert, um die Helligkeit, die Opazität und eine Verminderung der Viskosität bei Tintenauftrag auf das Papier zu steigern. Wiederum werden Kaolinkörner als Partikel mit einem Körnergrößendurchmesser von weniger als 2 µm bezogen auf 90 Ma-% der Gesamtmasse verwendet. 60 Ma-% der Kaolinkörner weisen sogar einen Komgrößendurchmesser von weniger als 0,5 µm auf. Diese Vorabselektierung wird durchgeführt, um harte Kaolinkörner zu erhalten, welche bei einem Komgrößendurchmesser von weniger als 2 µm vorrangig vorhanden sind. 85 Ma-% der kalzinierten Kaolinkörner weisen einen Komgrößendurchmesser von weniger als 1,7 µm auf.

US 6,027,561 A offenbart agglomerierte, hochreaktive Perlen aus Metakaolin, welche eine mittlere Teilchengröße von mehr als 10 µm aufweisen, wobei die Perlen ihrerseits aus Mikropartikeln mit einem mittlerem Durchmesser von etwa 5 µm oder weniger bestehen und in zementbasierten Puzzolanen verwendet werden.

Auch die Druckschrift GB 1 373 361 A offenbart grobkörnige Kaolin-Zusammensetzungen, welche in einem Beispiel zum Großteil Teilchengrößen von mehr als 10 µm im Durchmesser aufweisen, wobei es sich jedoch um nicht-kalzinierte handelt, welche einen hohen Glühverlust aufweisen.

In WO 2005/019349 werden beispielsweise sehr feinkörniges Metakaolin und kalzinierte Kaoline enthaltende Putzmassen beschrieben. Die kalzinierten Kaoline, welche in der Herstellung beispielsweise einer Flash-Kalzinierung und einer magnetischen Trennung unterzogen werden, weisen einen hohen Weissgrad auf.

Es sind auch kalzinierte Kaoline zur Beimischung in Farben bekannt, die bezogen auf ihre Korngrößendurchmesser ebenso eine hohe Feinheit, also ein Korngrößendurchmesser von weniger als 2 µm bei 90 Ma-% der Gesamtmasse aufweisen. Bei Verwendung derartig kleiner Kaolinpartikel wird an der Oberfläche der aufgetragenen Farbe ein starker Glanzeffekt erzeugt, der insbesondere bei Seh-Einfalls-Winkeln und/oder Lichteinfallswinkeln von mehr als 80° gegenüber der Orthogonalen auftritt. Derartige Glanzmessungen werden üblicherweise mittels eines Messgeräts von Byk Gardener unter einem Winkel von 85° gegenüber der Orthogonalen analog zur DIN EN ISO 2813 durchgeführt.

Derartige Glanzeffekte sind jedoch häufig unerwünscht, weshalb in den bisher bekannten Farben Diatomit zugemischt wird, um eine ausreichend matt wirkende Oberfläche zu erhalten. Allerdings enthält Diatomit einen hohen Anteil feiner kristalliner Kieselsäure, welcher unerwünscht ist. Feine kristalline Kieselsäuren mit einem Durchmesser von unter 5 µm sind lungengängig und gelten als krebserregend.

Auch kommt in matten Oberflächenbeschichtungen häufig Kalziumkarbonat zum Einsatz. Kalziumkarbonat wird bereits sehr lange als Füllstoff aufgrund des niedrigen Preises und des hohen Weißgrades eingesetzt. Neue Kalziumkarbonattypen wurden für die Erzeugung von Mattierung in Farben entwickelt. Diese Produkte führen zu einer niedrigeren Mattierung im Vergleich zu Diatomitprodukten, sind jedoch besser im Vergleich zu den herkömmlichen kalzinierten Kaolinen. Mit Kalziumkarbonat kann jedoch keine hohe Opazität erreicht werden. Das heißt, dass in bestimmten Anwendungen der Hintergrund durch die Oberflächenbeschichtung sichtbar bleibt. Für ein gutes Ergebnis muss mehrmals gestrichen werden. Dies führt, vor allem in Ländern mit hohen Personalkosten wie z.B. in West-Europa, zu viel höheren Preisen.

Demzufolge liegt der vorliegenden Erfindung die Aufgabe zugrunde, ein kalziniertes Kaolin zur Verfügung zu stellen, das eine gute Mattierung erzeugt und zugleich gute Weiße- und Opazitätseigenschaften aufweist, und zudem gesundheitsunbedenklich ist, eine Verwendung von kalziniertem Kaolin als Füllstoff für die Erhöhung der Mattierung, des Weißgrades und der Opazität in Oberflächenbeschichtungen, sowie ein Verfahren zur Herstellung eines Oberflächenschichtmaterials, welches mindestens ein Bindemittel und kalziniertes Kaolin als Füllstoff umfasst, zur Verfügung zu stellen, bei der/dem Oberflächenschichtmaterialien mit einem hohen Weißgrad, einer hohen Opazität und einer mattierend wirkenden Oberfläche erhalten werden können.

Diese Aufgabe wird verwendungsseitig durch die Merkmale des Patentanspruches 1, produktseitig durch die Merkmale des Patentanspruches 6 und verfahrensseitig durch die Merkmale des Patentanspruches 9 gelöst.

Ein wesentlicher Punkt der Erfindung liegt darin, dass bei einer Verwendung von kalziniertem Kaolin als Füllstoff für die Erhöhung des Weißgrads und der Opazität von weißen oder farbigen Mischungen das kalzinierte Kaolin zur Herstellung einer matt wirkenden Oberfläche einer die farbliche Mischung enthaltenden Oberflächenbeschichtung als grobkörnige Partikel, wovon mindestens 50 Ma-% einen Komgrößendurchmesser von mindestens 10 µm aufweisen, in mindestens ein Bindemittel oder ein Bindemittelgemisch eingemischt wird. Überraschenderweise und entgegen der herkömmlichen Meinung hat sich durch die Verwendung von sehr großen Kaolinpartikeln in farbigen oder weißen Mischungen ergeben, dass eine sehr gut mattierende Wirkung an der Oberfläche und somit eine weitestgehende Vermeidung des Glanzeffekts erhalten wird und sich zugleich ein höherer Weißgrad, teilweise von über 90, sehr gute Opazitätswerte, und ein verschwindend niedriger Anteil an freier kristalliner Kieselsäure innerhalb der Oberflächenbeschichtung bzw. der farblichen Mischung einstellen.

Gemäß einer bevorzugten Ausführungsform weisen mindestens 60 Ma-% und noch bevorzugter 70 Ma-%, der grobkörnigen Partikel einen Korngrößendurchmesser von mind. 10 µm, nämlich von 10 - 40 µm, auf.

Für die Bestimmung der Kornverteilung der Kaolinpartikel wird ein Sedigraph 5100 der Firma Micromeritics verwendet. Dieses Gerät ist ein Standardgerät für Komgrößenanalysen und wird sehr häufig in der Papier- und Farbenindustrie eingesetzt.

Derartige Oberflächenbeschichtungen können als Häuserputz oder beispielsweise als Farbe, wie Dispersions-, Acrylat- oder Silikat-, Silikon- und Dispersionsacrylatfarbe als Innen- oder Außenfarbe sowie Epoxidfarben und Straßenmarkierungsfarbe verwendet werden. Ebenso können derartige Oberflächenbeschichtungen als PU-Beschichtungen, Melamin-Formaldehydharzbeschichtungen sowie sonstige Beschichtungen, wie Oberflächenbeschichtungen für Stahl-, Holz- und Papierelemente bzw. -teile, für Fußböden mit organischen oder anorganischen Bindemitteln oder Mischungen derartiger Bindemittel angewandt werden.

Die Oberfläche der erfindungsgemäß hergestellten Oberflächenbeschichtung weist einen Weißgrad R457 von mindestens 80, bevorzugt 85, noch bevorzugter 87, noch bevorzugter 89 oder über 90 auf.

Zur Herstellung eines derartigen Oberflächenschichtmaterials wird das Kaolin als grobkörnige Partikel bei einer Temperatur aus einem Temperaturbereich von 900°C -1300°C, bevorzugt 1000°C - 1150°C, kalziniert.

Gemäß einer Weiterbildung der Erfindung kann in einem ersten Schritt vor dem Schritt der Kalzinierung eine zusätzliche Erwärmung der Kaolinkörner für eine Zeitspanne von 0,1 - 5 sec., vorzugsweise von 0,1 - 1 sec. und/oder 0,1 - 0,5 sec. stattfinden. Hierbei werden Temperaturen aus einem Temperaturbereich von 500 - 1600°C, vorzugsweise von 650 - 1300°C, verwendet. Dieser zusätzliche kurzzeitige thermische Verfahrensabschnitt führt dazu, dass die grobkörnigen Partikel Wasseranteile verlieren und nach Beendigung des ersten Verfahrensabschnittes eine geblähte Struktur aufweisen, die bei der sich anschließenden eigentlichen Kalzinierung beibehalten wird. Diese geblähte Struktur bewirkt eine höhere Opazität und erweist sich als vorteilhaft bei der Schaffung einer matt wirkenden Oberfläche der Oberflächenbeschichtung mit hohem Weißgrad und guten Opazitätswerten, in welcher dieses Kaolin verwendet wird.

Nach der zweiten Erwärmung weisen derartige kalzinierte Kaoline einen Weißgrad von mehr als 90 auf, welches einen hohen Weißgrad im Vergleich zu herkömmlichen kalzinierten Kaolinen darstellt.

Während des ersten Erwärmungsvorganges nimmt die Dichte der Kaolinkörner von 2,6 g/cm³ auf unter 2,4 g/cm³ ab, welches einen deutlichen Hinweis auf die geblähte Struktur der Kaolinkörner gibt. Die Dichte und somit die geblähte Struktur bleiben während der sich anschließenden zweiten Erwärmung aufrechterhalten.

Weitere vorteilhafte Ausführungsformen ergeben sich aus den Unteransprüchen.

Vorteile und Zweckmäßigkeiten sind der nachfolgenden Beschreibung zu entnehmen.

### Beispiel 1

Zur Herstellung von erfindungsgemäßem grobkörnigem kalziniertem Kaolin mit großen Korndurchmessern wird Rohkaolin mittels trocken- oder nassmechanischer Verfahren von feinen Kaolinanteilen, also von Kaolinkörnern mit geringen Korngrößendurchmessern, getrennt. Ebenso werden bei diesen Trennverfahren Fremdmineralien ausgesondert.

Das auf diese Weise voraufbereitete Kaolin wird gegebenenfalls zusätzlich chemisch oder physikalisch mittels eines Bleichverfahrens aufgehellt. Weiterhin kann - sofern erforderlich - im trockenen oder nassen Zustand eine zusätzliche Zerkleinerung der Kaolinkörner stattfinden, um die gewünschten Korngrößendurchmesser zu erhalten. Vor dem eigentlichen Kalzinierungsvorgang werden die Kaolinkörner getrocknet und pulverisiert.

Bei dem sich anschließenden Kalzinierungsvorgang werden Temperaturen von 1050°C - 1150°C innerhalb eines Ofens verwendet. Die auf diese Weise erhaltenen Kaolinkörner sind mit ihren Eigenschaften als Muster A in der nachfolgenden Tabelle 1 aufgelistet:

**Tabelle 1:**

| | Muster A | Muster B |
|---|---|---|
| **Optische Werte** | | |
| Weißgrad, R 457 ohne UV | 90 | 90 |
| **Physikalische Parameter** | | |
| Dichte, g/cm3 | 2,6 | 2,3 |
| Schüttdichte, kg/dm3 | 0,50 | 0,40 |
| | | |

| **Korngröße, Sedigraph** | Ma-% | |
|---|---|---|
| +40 µm | | |
| 30-40 µm | 1 | 4 |
| 20-30 µm | 9 | 16 |
| 10-20 µm | 55 | 51 |
| 6-10 µm | 20 | 16 |
| 4-6 µm | 6 | 5 |
| 2-4 µm | 5 | 3 |
| 0-2 µm | 4 | 5 |

Der Tabelle ist deutlich zu entnehmen, dass derart kalzinierte Kaolinkörner einen Weißgrad von 90 aufweisen. Die Dichte beträgt 2,6 g/cm³ und die Schüttdichte beträgt 0,5 kg/dm³.

Wie der Tabelle 1 zu entnehmen ist, besteht das Muster A aus Korngrößen mit einem Korngrößendurchmesser, der überwiegend im Bereich von mehr als 6 µm liegt, nämlich bezogen auf 85 Ma-% der Gesamtmasse des Kaolins. 65 Ma-% der Kaolinkörner weisen sogar einen Korngrößendurchmesser von mehr als 10 µm auf.

Mit "Muster B" werden in Tabelle 1 Kaolinkörner in ihren Eigenschaften dargestellt, die gemäß einem alternativen Herstellungsverfahren produziert wurden. Hierbei wird als vorgeschalteter thermischer Verfahrensabschnitt eine zusätzliche Erwärmung der Kaolinkörner für kurze Zeit durchgeführt. Die hierbei verwendeten Temperaturen liegen bevorzugt bei 650 -1300°C und bei Erwärmungszeiten von bis zu 1 sec.. Hierdurch erhalten die Kaolinkörner eine geblähte Struktur mit einer Dichte von weniger als 2,4 g/cm³, welche zuvor 2,6 g/cm³ betrug.

Anschließend wurde eine zuvor bereits beschriebene Kalzinierung im Temperaturbereich von 1000 -1150°C durchgeführt. Hierdurch werden Kaolinkörner mit einem Weißgrad von mehr als 89 erhalten, welche bei ihrer Verarbeitung in einer Oberflächenbeschichtung den gewünschten mattierenden Effekt mit guter Opazität und die Vermeidung eines Glanzeffektes erzeugen. Dies liegt unter anderem an der erzeugten geblähten Struktur der einzelnen Kaolinkörner mit geringer Dichte.

Wiederum ist bezogen auf das Muster B in Tabelle 1 ein hoher Anteil an Kaolinkörner mit großen Korngrößendurchmessern erkennbar. 87 Ma-% der Kaolinkörner gemäß Muster B weisen einen Korngrößendurchmesser von mehr als 6 µm und 71 Ma-% weisen einen Korngrößendurchmesser von mehr als 10 µm auf.

### Beispiel 2

Zur Herstellung einer Oberflächenbeschichtung werden 100 Teile eines Bindemittel und gegebenenfalls Additiven mit 30 Teilen an Füllstoffen derart vermischt, dass die Füllstoffe in das Bindemittelgemisch eingerührt werden. Anschließend wird das Gemisch 15 min. dispergiert. Hierdurch wird eine streichfähige Farbe erhalten.

Auf diese Weise werden sowohl die Muster A - B als auch drei kalzinierte Kaoline gemäß dem Stand der Technik, welche häufig in Farbmischungen verwendet werden (Beispiele 1 - 3), und das herkömmlich verwendete Diatomit (Beispiel 4) für die Erhaltung eines hohen Weißgrades in eine Bindemittel-Additivmischung eingearbeitet. Zusätzlich wird auch ein Kalziumkarbonat, das häufig in Farben eingesetzt wird, getestet. Die den Beispielen 1 - 3 und den Mustern A - B zugrundeliegende Verteilung der Korngrößendurchmesser ist nachfolgender Tabelle 2 zu entnehmen. Die auf diese Weise hergestellte Farbmischung wird anschließend auf Farbkarten gerakelt (schwarz-weiß) bzw. handgerakelt (150 µm Schichtstärke).

**Tabelle 2:**

| Anteil (Ma-%) der Körner in dem Bereich | > 2 µm | > 4 µm | > 6 µm | > 10 µm |
|---|---|---|---|---|
| Beispiel 1 | 25 | 14 | 6 | 3 |
| Beispiel 2 | 35 | 15 | 8 | 2 |
| Beispiel 3 | 50 | 22 | 16 | 12 |
| | | | | |
| Muster A | 96 | 91 | 85 | 65 |
| Muster B | 95 | 92 | 87 | 71 |

Es werden Nasswerte der Farbmischung unmittelbar nach dem Rakeln und Trockenwerte 4 Tage nach dem Rakeln gemessen.

Das verwendete Bindemittelgemisch weist als Hauptbestandteile die in Tabelle 3 wiedergegebene Zusammensetzung auf:

**Tabelle 3:**

| Gramm | Bestandteil |
|---|---|
| 486,0 | Wasser, entmin. |
| 500,0 | Acronal 559 |
| 14,0 | Additive |

Für die Bestimmung der Nassopazität wird der Quotient aus Weißgrad über schwarz und Weißgrad über weiß berechnet, wobei die Weißgradmessungen jeweils unmittelbar nach dem Rakeln durchgeführt werden.

Für die Bestimmung der Trockenopazität werden der Quotient aus Weißgrad über schwarz und Weißgrad über weiß berechnet und Weißgradmessungen werden jeweils nach vier Tagen ab dem Zeitpunkt des Rakelns durchgeführt. Mittels einer doppelt durchgeführten Bestimmung wurde ein Durchschnittswert ermittelt.

Für die Bestimmung des Glanzwertes bei einem Einfallswinkel von 85° wird das Reflektometer-Verfahren gemäß Micro Tri Gloss der Fa. Byk Gardner nach DIN 67530, ISO 2813 und ASTM D 523 angewendet. Je niedriger der Glanzwert ist, desto höher ist die gewünschte mattierende Wirkung der Oberfläche der aufgetragenen Farbe.

Nachfolgend werden die Messergebnisse zu den Nasswerten anhand der Tabelle 4 und zu den Trockenwerten anhand der Tabelle 5 aufgeführt.

**Tabelle 4: Nasswerte**

| Bezeichnung | | Weissgrad über weiß | Weißgrad über schwarz | Nassopazität |
|---|---|---|---|---|
| Beispiel 1 | kalziniertes Kaolin | 76,54 | 55,99 | 0,73 |
| Beispiel 2 | kalziniertes Kaolin | 80,55 | 62,50 | 0,78 |
| Beispiel 3 | kalziniertes Kaolin | 78,58 | 61,30 | 0,78 |
| | | | | |
| Beispiel 4 | Diatomit | 82,14 | 48,85 | 0,59 |
| Beispiel 5 | CaCO3 | 83,50 | 45,93 | 0,55 |
| | | | | |
| Muster A | kalziniertes Kaolin | 82,94 | 57,65 | 0,70 |
| Muster B | kalziniertes Kaolin | 83,32 | 66,42 | 0,80 |

**Tabelle 5: Trockenwerte**

| Bezeichnung | | Weissgrad über weiß | Weißgrad über schwarz | Trockenopazität | Glanz 85° |
|---|---|---|---|---|---|
| Beispiel 1 | kalziniertes Kaolin | 81,28 | 71,57 | 0,88 | 4,5 |
| Beispiel 2 | kalziniertes Kaolin | 82,64 | 66,04 | 0,80 | 2,5 |
| Beispiel 3 | kalziniertes Kaolin | 82,27 | 66,27 | 0,81 | 2,5 |
| | | | | | |
| Beispiel 4 | Diatomit | 82,66 | 43,04 | 0,52 | 0,6 |
| Beispiel 5 | CaCO3 | 87,69 | 7,39 | 0,08 | 1,3 |
| | | | | | |
| Muster A | kalziniertes Kaolin | 81,93 | 31,65 | 0,39 | 0,5 |
| Muster B | kalziniertes Kaolin | 84,96 | 54,27 | 0,64 | 0,5 |

Der Tabelle 4 sind zusätzlich zu den erfinderischen Mustern A - B Beispiele 1 - 5 gemäß dem Stand der Technik zu entnehmen, die herkömmlicherweise häufig in Farbmischungen verwendet werden.

In Tabelle 5 gibt der Wert der Trockenopazität den Quotienten aus dem Weißgrad über weiß und dem Weißgrad über schwarz an. Hierbei ist der optimale Wert 1. Bei dem Glanzwert 85° handelt es sich um einen Wert, der aufgrund der gewünschten matten Oberfläche möglichst klein sein sollte.

Durch einen Vergleich der Weißgrad-, Trocken- und Nassopazitätswerte und der Glanzwerte (Tabelle 5) der Beispiele 1 -5 mit den erfindungsgemäßen Mustern A - B wird verdeutlicht, dass bei Einsatz gröberer kalzinierter Kaoline die besten Eigenschaften hinsichtlich Weißgrad, Opazität und Glanz erhalten werden. Demgegenüber weist bei den Beispielen 1 - 5 mindestens eine dieser Eigenschaften Weißgrad, Opazität und Glanz, schlechtere bzw. niedrigere Werte hinsichtlich des Weißgrades und der Opazität und höheren Werte hinsichtlich des Glanzes auf, wohingegen der bei den Mustern A - B zeitgleich die Werte von Weißgrad und Opazität relativ hoch sowie vom Glanz sehr niedrig sind. Somit wird mit den erfindungsgemäßen Produkten eine Oberflächenbeschichtung mit einer hohen Opazität, einem hohen Weißgrad und einem sehr niedrigen Glanzwert zur Verfügung gestellt.

Beide erfinderischen Produkte Muster A und B weisen einen besonders niedrigen Glanzwert bei 85° auf. Für Oberflächenbeschichtungen mit solchen niedrigen Glanzwerten wird herkömmlicherweise z.B. Diatomit eingesetzt. Dieser Diatomit hat, zusätzlich zu dem bereits erwähnten hohen Anteil an lungengängigen kristallinen Kieselsäuren, eine viel niedrigere Nassopazität, was beim Streichen der Farbe sehr nachteilig ist. Weiterhin hat das erfinderische Muster B durch die zusätzliche Dichtereduzierung eine viel höhere Trockenopazität sowie einen höheren Weißgrad gegenüber Diatomit.

Die herkömmlichen kalzinierten Kaoline zeigen gute optische Werte aber führen zu einer glänzenden Oberflächenbeschichtung. Diese sind deswegen für die Erzeugung einer matten Oberfläche nicht brauchbar.

Ein weiterer Füllstoff, der häufig in Oberflächenbeschichtungen eingesetzt wird, ist Kalziumkarbonat. Kalziumkarbonat wird aufgrund seines niedrigen Preises sowie gutes Weißgrades eingesetzt. Wie der Tabelle 5 zu entnehmen ist, ist der Weißgrad sehr hoch. Die Mattierung liegt zwischen den sehr guten Werten der erfinderischen grobkörnigen kalzinierten Kaolinen und den sehr schlechten Werten der herkömmlichen feinen kalzinierten Kaolinen. Dieses Produkt ist aber aufgrund der sehr niedrigen Trockenopazität nicht einsetzbar.

Zudem weisen die Muster A - B sehr geringe Anteile, also deutlich unter 1 Ma-%, an freier kristalliner Kieselsäure auf.

### Beispiel 3

Um die Vorteile der erfinderischen kalzinierten Kaoline in Innendispersionsfarben darzustellen, werden ein erfinderisches kalziniertes Kaolin sowie 8 herkömmliche Pigmente getestet.

**Tabelle 6: Rezeptur (Gewichtsverhältnisse):**

| **Komponente** | **Standard** | **1 bis 9** |
|---|---|---|
| **Wasser** | 34,5% | 32,9% |
| **Bindemittel** | 13,3% | 12,7% |
| **Füllstoff** | 35,1% | 33,4% |
| **TiO2** | 14,3% | 13,6% |
| **Additive** | 2,8% | 2,8% |
| **Mattierungsmittel** | 0,0% | 4,8% |

Die Standardrezeptur enthält keine Mattierungsmittel. In Rezepturen 1 bis 8 werden jeweils 4,8 Ma-% an herkömmlichen Mattierungsmitteln zugemischt. Die Rezeptur 9 enthält die gleiche Menge des erfinderischen Pigmentes gemäß "Muster B" aus Beispiel 1. Die verwendeten Mattierungsmittel werden in nachfolgender Tabelle 7 aufgelistet:

**Tabelle 7: Mattierungsmittel**

| Rezeptur | Mattierungsmittel |
|---|---|
| 0 | - |
| 1 | Kalziumkarbonat |
| 2 | Plastorit |
| 3 | Kalziumkarbonat |
| 4 | Kalziumkarbonat |
| 5 | Glimmer |
| 6 | Diatomit |
| 7 | Diatomit |
| 8 | Natriumaluminiumsilikat |
| 9 | Muster B |

Anschließend werden den Glanz (85°), Weißgrad, Gelbwert und das Kontrastverhältnis gemessen. Die Ergebnisse werden in der Tabelle 8 gezeigt.

**Tabelle 8:**

| Rezeptur | Mattierungsmittel | Glanz 85° | Weissgrad | Gelbindex | Kont. Verhältnis |
|---|---|---|---|---|---|
| 0 | - | 9,6 | 87,87 | 2,46 | 0,993 |
| 1 | Kalziumkarbonat | 5,7 | 87,48 | 2,48 | 0,995 |
| 2 | Plastorit | 6,2 | 86,64 | 2,60 | 0,997 |
| 3 | Kalziumkarbonat | 5,6 | 87,52 | 2,50 | 0,994 |
| 4 | Kalziumkarbonat | 5,7 | 87,15 | 2,64 | 0,995 |
| 5 | Glimmer | 5,3 | 82,22 | 3,73 | 0,999 |
| 6 | Diatomit | 3,8 | 86,66 | 2,64 | 0,997 |
| 7 | Diatomit | 7,0 | 86,91 | 2,61 | 0,997 |
| 8 | Natriumaluminiumsilikat | 9,4 | 88,12 | 2,64 | 0,996 |
| 9 | Muster B | 3,8 | 87,37 | 2,59 | 0,997 |

Der Tabelle 8 kann entnommen werden, dass mit dem erfinderischen Muster B der niedrigste Glanzwert, also die beste Mattierung, erreicht werden kann. Diese gute Mattierung kann nur mit bestimmten Diatomittypen erreicht werden. Diese haben aber schlechtere optische Eigenschaften, wie z.B. einen niedrigeren Weißgrad und einen höheren Gelbindex (die Farbe ist grau- und gelbstichiger). Darüber hinaus enthält Diatomit im Vergleich zum erfinderischen Produkt relativ hohe Anteile an kristallinen Kieselsäuren und ist kostenintensiver. Die weiteren Pigmente zeigen höhere Glanzwerte, die für hochqualitative matte Farben nicht ausreichend sind.

Weiterhin wird das hohe Kontrastverhältnis der Farbe, die gemäß dem erfinderischen Muster B hergestellt ist, nur von der Farbe, die mit Glimmer (Rezeptur 5) hergestellt ist, übertroffen. Der Einsatz von Glimmer führt aber gleichzeitig zu einem sehr niedrigen Weißgrad und einem relativ hohen Gelbwert, und kann deswegen nicht in hochwertigen weißen Farben eingesetzt werden. Darüber hinaus ist auch der Glanz bei 85° zu hoch, weshalb keine optimale Mattierung erreicht werden kann.

### Beispiel 4

Die Mattierung der Oberflächenbeschichtung kann noch weiter gesteigert werden, wenn höhere Konzentrationen des erfinderischen Produktes gemäß "Muster B" eingesetzt werden. Dazu wird die Rezeptur aus Beispiel 3 durch eine Steigerung des Anteils an Muster B und eine entsprechende Reduzierung der Konzentration an Füllstoffen angepasst. Die Rezepturen können der Tabelle 9 entnommen werden. Anschließend wird die Mattierung analog zu Beispiel 3 gemessen. Die Ergebnisse sind in der Tabelle 10 zusammengestellt.

**Tabelle 9:**

| **Komponente** | **Standard** | **10** | **11** | **12** |
|---|---|---|---|---|
| **Wasser** | 34,5% | 34,5% | 34,5% | 34,5% |
| **Bindemittel** | 13,3% | 13,3% | 13,3% | 13,3% |
| **Füllstoff** | 35,1% | 30,1% | 27,6% | 25,1% |
| **TiO2** | 14,3% | 14,3% | 14,3% | 14,3% |
| **Additive** | 2,8% | 2,8% | 2,8% | 2,8% |
| **Mattierungsmittel** | 0,0% | 5,0% | 7,5% | 10,0% |

**Tabelle 10:**

| **Rezeptur** | **Mattierungsmittel** | **Glanz 85°** |
|---|---|---|
| 0 | - | 9,6 |
| 9 | Muster B, 4,8% | 3,8 |
| 10 | Muster B, 5% | 2,4 |
| 11 | Muster B, 7,5% | 1,8 |
| 12 | Muster B, 10% | 1,4 |

Der Tabelle 10 ist zu entnehmen, dass die Mattierung noch weiter gesteigert werden kann. Die erfinderischen kalzinierten Kaolinen sind deswegen auch in hochmatten Oberflächenbeschichtungen einsetzbar.

Wie den Beispielen entnommen worden kann, bieten nur die erfinderischen grobkörnigen kalzinierten Kaoline gemäß "Muster A" und "Muster B" eine optimale Kombination von Weiße, Opazität und Mattierung. Die Produkte mit niedrigerer Dichte (Muster B) erzeugen dabei die besten Opazitätswerte. Darüber hinaus enthalten die erfinderischen kalzinierten Kaoline sehr niedrige Anteile an freien kristallinen Kieselsäuren und sind deswegen nicht gesundheitsschädlich.

Das erfindungsgemäße grobteilige kalzinierte Kaolin kann als Bestandteil von Mischungen zur Beschichtung von Oberflächen jeder Art verwendet werden. Derartige Mischungen sind beispielsweise Farben oder Putze oder sonstige derartige Beschichtungen. Die Mischungen können sowohl auf anorganischer als auch auf organischer oder auf anorganischer und organischer Basis in ihrer Zusammensetzung, insbesondere im Hinblick auf das verwendete Bindemittelgemisch, beruhen.

Derartige Oberflächenbeschichtungen sind sowohl im Außen- als auch im Innenbereich auftragbar. Der hierdurch erwirkte mattierende Effekt der Oberfläche der Beschichtung ist neben einer Verbesserung in der Handhabung derartiger Beschichtungen, ihrer Verarbeitbarkeit, der Witterungsbeständigkeit, der Lichtechtheit, dem guten Abbindevermögen, der niedrigen Abrasivität, der geringen Rissbildungswerte sowie einer guten Scheuerbeständigkeit vorteilhaft erreichbar.

Sämtliche in den Anmeldungsunterlagen offenbarten Merkmale werden als erfindungswesentlich beansprucht, sofern sie einzeln oder in Kombination gegenüber dem Stand der Technik neu sind.

## Patentansprüche

1. Verwendung von kalziniertem Kaolin als Füllstoff für die Erhöhung des Weißgrades und der Opazität von weißfarbigen und farbliche Mischungen,
**dadurch gekennzeichnet, dass**
das kalzinierte Kaolin zur Herstellung einer matt wirkenden Oberfläche einer die farbliche oder weißfarbige Mischung enthaltenden Oberflächenbeschichtung als grobkörnige Partikel, wovon mindestens 50 Ma-% einen Komgrößendurchmesser von mindestens 10 µm aufweisen, in mindestens ein Bindemittel eingemischt werden.

2. Verwendung nach Anspruch 1,
**dadurch gekennzeichnet, dass**
mindestens 60 Ma-%, bevorzugt mindestens 70 Ma-% der grobkörnigen Partikel einen Komgrößendurchmesser von mindestens 10 µm aufweisen.

3. Verwendung nach einem der Ansprüche 1 oder 2,
**dadurch gekennzeichnet, dass**
die Oberfläche der Oberflächenbeschichtung einen Weißgrad R457 von mindestens 85, bevorzugt mindestens 90, aufweist.

4. Verwendung nach einem der Ansprüche 1 - 3,
**dadurch gekennzeichnet, dass**
die Oberflächenbeschichtung als Häuserputz verwendet wird.

5. Verwendung nach einem der Ansprüche 1-3,
**dadurch gekennzeichnet, dass**
die Oberflächenbeschichtung als Farbe, wie Dispersions-, Acrylat-, Silikon-, Epoxid- und Silikatfarben, verwendet wird.

6. Kalziniertes Kaolin als Füllstoff für die Erhöhung des Weißgrades und der Opazität von weißfarbigen und farbliche Mischungen,
**dadurch gekennzeichnet, dass**
das kalzinierte Kaolin grobkörnige Partikel, die eine Dichte unter 2,4 g/cm³ aufweisen und wovon mindestens 50 Ma-% einen Komgrößendurchmesser von mindestens 10 µm aufweisen, sind.

7. Kalziniertes Kaolin nach Anspruch 6,
**dadurch gekennzeichnet, dass**
mindestens 60 Ma-%, bevorzugt mindestens 70 Ma-% der grobkörnigen Partikel einen Komgrößendurchmesser von mindestens 10 µm aufweisen.

8. Kalziniertes Kaolin nach Anspruch 7,
**dadurch gekennzeichnet, dass**
die Kaolinpartikel eine Dichte unter 2,3 g/cm³ aufweisen.

9. Verfahren zur Herstellung eines Oberflächenschichtmaterials, welches mindestens ein Bindemittel und ein kalziniertes Kaolin als Füllstoff umfasst,
**dadurch gekennzeichnet, dass**
das Kaolin als grobkörnige Partikel, wovon mindestens 50 Ma-% einen Komgrößendurchmesser von mindestens 10 µm aufweisen, bei einer Temperatur aus einem Temperaturbereich von 900°C - 1300°C, bevorzugt 1000°C -1150 °C, kalziniert wird.

10. Verfahren nach Anspruch 9,
**dadurch gekennzeichnet, dass**
das Kaolin vor der Kalzinierung für eine Zeitspanne von 0,1 - 5 sec., vorzugsweise von 0,1 - 1 sec. auf eine Temperatur aus einem Temperaturbereich von 500°C -1600°C, vorzugsweise 650°C - 1300°C erwärmt wird, um eine geblähte Struktur der grobkörnigen Partikel zu erhalten.

11. Verfahren nach Anspruch 10,
**dadurch gekennzeichnet, dass**
das Kaolin durch die Erwärmung eine Dichte-Veränderung von 2,6 auf unter 2.4 g/cm³ durchläuft.

12. Verfahren nach Anspruch 10 oder 11,
**dadurch gekennzeichnet, dass**
das Kaolin zwischen der ersten Erwärmung und der für die Kalzinierung notwendigen zweiten Erwärmung abgekühlt wird.

## Claims

1. Use of calcined kaolin as a filler for increasing the degree of whiteness and the opacity of white and coloured mixtures, **characterised in that** the calcined kaolin as coarse particles, of which at least 50% by weight have a particle diameter of at least 10 µm, is mixed into at least one binder in order to produce a matt-effect surface of a surface coating containing the coloured or white mixture.

2. Use according to claim 1, **characterised in that** at least 60% by weight, preferably at least 70% by weight, of the coarse particles have a particle diameter of at least 10 µm.

3. Use according to one of claims 1 or 2, **characterised in that** the surface of the surface coating has a degree of whiteness R457 of at least 85, preferably at least 90.

4. Use according to one of claims 1 to 3, **characterised in that** the surface coating is used as a house render.

5. Use according to one of claims 1 to 3, **characterised in that** the surface coating is used as a paint, such as dispersion, acrylate, silicone, epoxy and silicate paints.

6. Calcined kaolin as a filler for increasing the degree of whiteness and the opacity of white and coloured mixtures, **characterised in that** the calcined kaolin comprises coarse particles which have a density of less than 2.4 g/cm³ and of which at least 50% by weight have a particle diameter of at least 10 µm.

7. Calcined kaolin according to claim 6, **characterised in that** at least 60% by weight, preferably at least 70% by weight, of the coarse particles have a particle diameter of at least 10 µm.

8. Calcined kaolin according to claim 7, **characterised in that** the kaolin particles have a density of less than 2.3 g/cm³.

9. Method for producing a surface coating material which comprises at least one binder and a calcined kaolin as filler, **characterised in that** the kaolin as coarse particles, of which at least 50% by weight have a particle diameter of at least 10 µm, is calcined at a temperature within a temperature range of 900°C - 1300°C, preferably 1000°C - 1150°C.

10. Method according to claim 9, **characterised in that,** prior to the calcination, the kaolin is heated for a duration of 0.1 - 5 seconds, preferably 0.1 - 1 second, at a temperature within a temperature range of 500°C - 1600°C, preferably 650°C - 1300°C, in order to obtain an inflated structure of the coarse particles.

11. Method according to claim 10, **characterised in that** the kaolin, as a result of the heating, undergoes a change in density from 2.6 to less than 2.4 g/cm³.

12. Method according to claim 10 or 11, **characterised in that** the kaolin is cooled between the first heating and the second heating required for the calcination.

## Revendications

1. Utilisation de kaolin calciné en tant que charge pour augmenter le degré de blancheur et l'opacité de mélanges blancs et de mélanges colorés, **caractérisée en ce que** pour la production d'une surface à effet mat d'un revêtement de surface contenant le mélange blanc ou coloré on incorpore le kaolin calciné, sous forme de grosses particules, dont au moins 50 % en masse ont un diamètre de grain d'au moins 10 µm, dans au moins un liant.

2. Utilisation selon la revendication 1, **caractérisée en ce qu'**au moins 60 % en masse, de préférence au moins 70 % en masse des grosses particules ont un diamètre de grain d'au moins 10 µm.

3. Utilisation selon la revendication 1 ou 2, **caractérisée en ce que** la surface du revêtement de surface présente un degré de blancheur R457 d'au moins 85, de préférence d'au moins 90.

4. Utilisation selon l'une quelconque des revendications 1 à 3, **caractérisée en ce que** le revêtement de surface est utilisé en tant qu'enduit pour la maison.

5. Utilisation selon l'une quelconque des revendications 1 à 3, **caractérisée en ce que** le revêtement de surface est utilisé en tant que peinture, telle que des peintures en dispersions, acrylate, silicone, époxyde et silicate.

6. Kaolin calciné en tant que charge pour augmenter le degré de blancheur et l'opacité de mélanges blancs et de mélanges colorés, **caractérisé en ce que** le kaolin calciné consiste en des grosses particules qui présentent une densité inférieure à 2,4 g/cm³ et dont au moins 50 % en masse ont un diamètre de grain d'au moins 10 µm.

7. Kaolin calciné selon la revendication 6, **caractérisé en ce qu'**au moins 60 % en masse, de préférence au moins 70 % en masse des grosses particules présentent un diamètre de grain d'au moins 10 µm.

8. Kaolin calciné selon la revendication 7, **caractérisé en ce que** les particules de kaolin ont une densité inférieure à 2,3 g/cm³.

9. Procédé pour la production d'un matériau pour couche superficielle, qui comprend au moins un liant et un kaolin calciné en tant que charge, **caractérisé en ce que** le kaolin sous forme de grosses particules, dont au moins 50 % en masse ont un diamètre de grain d'au moins 10 µm, est calciné à une température choisie dans une plage de température de 900 °C à 1 300 °C, de préférence de 1 000 °C à 1 150 °C.

10. Procédé selon la revendication 9, **caractérisé en ce qu'**avant la calcination on chauffe le kaolin pendant une durée de 0,1 - 5 secondes, de préférence de 0,1 - 1 seconde, à une température choisie dans une plage de température de 500 °C à 1 600 °C, de préférence de 650 °C à 1300°C, afin d'obtenir une structure gonflée des grosses particules.

11. Procédé selon la revendication 10, **caractérisé en ce que** de 2,6 g/cm³, la densité du kaolin passe à 2,4 g/cm³ sous l'effet du chauffage.

12. Procédé selon la revendication 10 ou 11, **caractérisé en ce qu'**on refroidit le kaolin entre le premier chauffage et le second chauffage requis pour la calcination.
